(19) 

**Europäisches Patentamt**
**European Patent Office**
**Office européen des brevets**

(11) **EP 4 648 405 A1**

(12) 

# EUROPEAN PATENT APPLICATION
published in accordance with Art. 153(4) EPC

(43) Date of publication:
**12.11.2025 Bulletin 2025/46**

(21) Application number: **24750510.0**

(22) Date of filing: **26.01.2024**

(51) International Patent Classification (IPC):
$H04N\ 13/31^{(2018.01)}$   $H04N\ 13/305^{(2018.01)}$
$H04N\ 13/383^{(2018.01)}$   $H04N\ 13/117^{(2018.01)}$

(52) Cooperative Patent Classification (CPC):
**H04N 13/117; H04N 13/305; H04N 13/31;**
**H04N 13/383**

(86) International application number:
**PCT/KR2024/001302**

(87) International publication number:
**WO 2024/162709 (08.08.2024 Gazette 2024/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.02.2023 KR 20230015142**

(71) Applicant: **Epitone, Inc.**
**San Diego, California 92122 (US)**

(72) Inventors:
- **YANUSIK, Igor**
  **Incheon 22002 (KR)**
- **KWON, Se Yong**
  **Incheon 21982 (KR)**
- **LEE, Seung Hyun**
  **Seoul 07617 (KR)**

(74) Representative: **RGTH**
**Patentanwälte PartGmbB**
**Neuer Wall 10**
**20354 Hamburg (DE)**

(54) **THREE-DIMENSIONAL IMAGE DISPLAY METHOD USING AUGMENTED REALITY, AND DEVICE THEREFOR**

(57)    Provided are a three-dimensional image display method using augmented reality and a device therefor. A three-dimensional image display method includes an eye position data collection step for collecting actual eye position data about a user, a virtual display panel preparation step for preparing a virtual display panel having augmented reality display specifications, a virtual barrier calculation step for calculating a virtual barrier on the basis of the actual eye position data and the virtual display panel, a virtual display panel pixel assignment step for assigning pixels of the virtual display panel to correspond to the actual viewpoint of the user on the basis of the actual eye position data and the virtual barrier, a rendering step for rendering stereo content corresponding to the actual viewpoint of the user, and a display step for displaying a three-dimensional image on the basis of the assigned pixels and the stereo content.

Fig. 3

EP 4 648 405 A1

## Description

### TECHNICAL FIELD

The disclosure relates to a three-dimensional image display method and device using augmented reality.

### BACKGROUND ART

Augmented reality (AR) displays have optical see-through properties to fuse virtual images with real-world scenes. To achieve a sufficient field of view (FoV) and virtual image distance (VID), a display device is combined with a projection optics system to magnify the display. At the same time, the magnified images must have three-dimensional (3D) features to better match real-world objects.

Three-dimensional displays each having a lenticular lens or a parallax barrier may be used as source images for 3D augmented reality.

Here, rendering and pixel assignment for such displays requires rendering and pixel assigning methods for specific viewpoints. The prior art requires finding a virtual image in every frame for both an actual viewpoint and a virtual viewpoint. However, this is problematic because additional calculation is required in the process of converting the actual viewpoint to the virtual viewpoint, thereby resulting in latency.

### DISCLOSURE

#### Technical Problem

Accordingly, the disclosure has been made to overcome the above-described problems, and an objective of the disclosure is to perform a method for locating a virtual image in relation to an actual viewpoint using virtual barrier parameters, thereby enabling low-latency virtual image localization.

#### Technical Solution

In order to achieve the above objective, according to an aspect of the disclosure, provided is a three-dimensional (3D) image display method including: an eye position data collection operation of collecting actual eye position data of a user; a virtual display panel preparation operation of preparing a virtual display panel having an augmented reality display specification; a virtual barrier calculation operation of calculating a virtual barrier based on the actual eye position data and the virtual display panel; a virtual display panel pixel assignment operation of assigning pixels of the virtual display panel to correspond to an actual viewpoint of the user, based on the actual eye position data and the virtual barrier; a rendering operation of rendering stereo content corresponding to the actual viewpoint of the user; and a display operation of displaying a 3D image based on the assigned pixels and the stereo content.

According to embodiments, the actual eye position data may be collected using an eye-tracking camera.

According to embodiments, the actual viewpoint may include a left eye viewpoint and a right eye viewpoint, and the pixel assignment operation may assign a pixel corresponding to the left eye viewpoint and a pixel corresponding to the right eye viewpoint.

According to embodiments, the actual viewpoint may include a left eye viewpoint and a right eye viewpoint, and the stereo content may be paired data of content corresponding to the left eye viewpoint and content corresponding to the right eye viewpoint.

According to embodiments, the augmented reality display specification may include a virtual image distance (d) and a viewing angle.

According to embodiments, the virtual display panel may have a first parameter, and the virtual barrier calculation operation may calculate a second parameter of the virtual barrier from the augmented reality display specification, the first parameter, and the actual eye position data.

According to embodiments, the first parameter may include a magnification (M) of the virtual display panel and a pitch ($P'_P$) and a number (N) of pixels of the virtual display panel.

According to embodiments, the second parameter may include a virtual barrier gap and a virtual barrier pitch.

According to another aspect of the disclosure, provided is a computer program stored on a medium, configured to execute the method of one of the above-described embodiments in combination with hardware.

According to another aspect of the disclosure, a 3D image display method including: a data collection operation of collecting actual eye position data of a user; a virtual display panel setting operation of setting a virtual display panel located at a virtual image distance (d) and having a first parameter from the actual eye position data; a virtual barrier calculation operation of calculating a second parameter of a virtual barrier based on an augmented reality display specification, the first parameter, and the actual eye position data; a pixel assignment operation of assigning pixels of the virtual display panel based on the virtual barrier of which the second parameter is calculated, actual left eye position data, and actual right eye position data, wherein the actual eye position data includes the actual left eye position data and the actual right eye position data; a rendering operation of rendering paired contents corresponding to the actual left eye position data and the actual right eye position data; and a display operation of displaying a 3D image based on the assigned pixels and the paired contents.

According to another aspect of the disclosure, provided is a 3D image display device including: a processor; and a memory having computer-readable instructions stored thereon, wherein the processor is configured, when the instructions are executed by the processor, to: calculate a virtual barrier based on collected actual eye position data of a user and a virtual display panel having an augmented reality display specification; assign pixels of the virtual display panel to correspond to an actual viewpoint of the user, based on the actual eye position data and the virtual barrier; render stereo content corresponding to the actual viewpoint of the user; and display a 3D image based on the assigned pixels and the stereo content.

According to embodiments, the augmented reality display specification may include a virtual image distance (d) and a viewing angle.

According to embodiments, the virtual display panel may have a first parameter, and the virtual barrier calculation may calculate a second parameter of the virtual barrier from the augmented reality display specification, the first parameter, and the actual eye position data.

According to embodiments, the first parameter may include a magnification (M) of the virtual display panel and a pitch ($P'_P$) and a number (N) of pixels of the virtual display panel.

According to embodiments, the second parameter may include a virtual barrier gap and a virtual barrier pitch.

According to another aspect of the disclosure, provided is a method of designing a 3D image display device, the method including: an eye position data collection operation of collecting actual eye position data of a user; a virtual display panel preparation operation of preparing a virtual display panel having an augmented reality display specification; a virtual barrier calculation operation of calculating a virtual barrier based the on actual eye position data and the virtual display panel; and an actual barrier designing operation of designing an actual barrier based on the virtual barrier.

According to embodiments, the augmented reality display specification may include a virtual image distance and a viewing angle.

According to embodiments, the virtual display panel may have a first parameter, and the virtual barrier calculation operation may calculate a second parameter of the virtual barrier from the augmented reality display specification, the first parameter, and the actual eye position data.

According to embodiments, the first parameter may include a magnification (M) of the virtual display panel and a pitch ($P'_P$) and a number (N) of pixels of the virtual display panel.

According to embodiments, the second parameter may include a virtual barrier gap and a virtual barrier pitch.

According to embodiments, the actual barrier designing operation may calculate a third parameter of the actual barrier using a second parameter of the virtual barrier.

According to embodiments, the second parameter may include a virtual barrier gap and a virtual barrier pitch, and the third parameter includes an actual barrier gap and an actual barrier pitch.

According to embodiments, the actual barrier designing operation may calculate a distance from a principal plane of a real optical system to a real display panel and a distance from the principal plane of the real optical system to the actual barrier.

According to another aspect of the disclosure, provided is a method of designing a 3D image display device, the method including: an eye position data collection operation of collecting actual eye position data of a user; a virtual display panel preparation operation of preparing a virtual display panel having an augmented reality display specification; a virtual barrier calculation operation of calculating a virtual barrier based on the actual eye position data and the virtual display panel; a virtual display panel pixel assignment operation of assigning pixels of the virtual display panel to correspond to an actual viewpoint of the user, based on the actual eye position data and the virtual barrier; a rendering operation of rendering stereo content corresponding to the actual viewpoint of the user; a display operation of displaying a 3D image based on the assigned pixels and the stereo content; and an actual barrier designing operation of designing an actual barrier based on the virtual barrier.

## Advantageous Effects

According to the disclosure, the rendering and pixel assignment procedures are simplified by eliminating the need to find a virtual image of the viewpoint in every frame.

According to the disclosure, a method of finding a virtual image for an "actual viewpoint" using "virtual barrier parameters" is performed. In this case, the virtual barrier parameters used for rendering and pixel assignment are calculated only once, and are always similar, thereby resulting in the effect of rapid calculation.

Furthermore, according to the disclosure, the rendering procedures for an augmented reality display device are improved.

## DESCRIPTION OF DRAWINGS

FIG. 1 is a diagram illustrating a rendering process for a virtual screen and real eyes according to the related art.

FIG. 2A is a block diagram illustrating an approach to finding a virtual image in every frame according to the related art.

FIG. 2B is a block diagram illustrating an approach to finding a virtual image in every frame according to an embodiment of the disclosure.

FIG. 3 is a diagram illustrating a method of calculating a virtual barrier according to an embodiment of the disclosure.

FIG. 4 is a diagram illustrating an assignment method based on a short-range rule according to an embodiment of the disclosure.

FIG. 5 is a diagram illustrating a system layout for 3D rendering of stereo content scenes which has a single path from a virtual display to the real eyes, according to an embodiment of the disclosure.

FIG. 6 is a diagram illustrating a system layout for assignment and rendering which has a single path from a virtual display to the real eyes, according to an embodiment of the disclosure.

FIG. 7 is a diagram illustrating a process of calculating an actual barrier from a virtual barrier, taking into account the configuration of an optical system, according to an embodiment of the disclosure.

FIG. 8A is a diagram illustrating an actual barrier as a parallax barrier having slits according to an embodiment of the disclosure.

FIG. 8B is a diagram illustrating an actual barrier as a lenticular lens having an air gap according to an embodiment of the disclosure.

FIG. 8C is a diagram illustrating an actual barrier as a solid lenticular lens according to an embodiment of the disclosure.

## BEST MODE

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure. Rather, these embodiments are provided so that the description of the disclosure will be complete and will fully convey the scope of the disclosure to a person having ordinary skill in the art in the technical field to which the disclosure pertains. In the following description of the disclosure, a detailed description of related known technology will be omitted when the description may render the subject matter of the disclosure unclear.

The terminology used herein is for the purpose of describing particular embodiments only and is not intended to be limiting. As used herein, the singular forms are intended to include the plural forms as well, unless the context clearly indicates otherwise.

Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance. Although terms, such as "first", "second", or the like, may be used to describe various components, these components should not be conceived of as being limited by these terms. These terms are only used to distinguish a component from another component.

Hereinafter, embodiments according to the disclosure will be described in detail with reference to the accompanying drawings, in which identical or similar constituent elements are given the same reference numerals, and repeated descriptions thereof will be omitted.

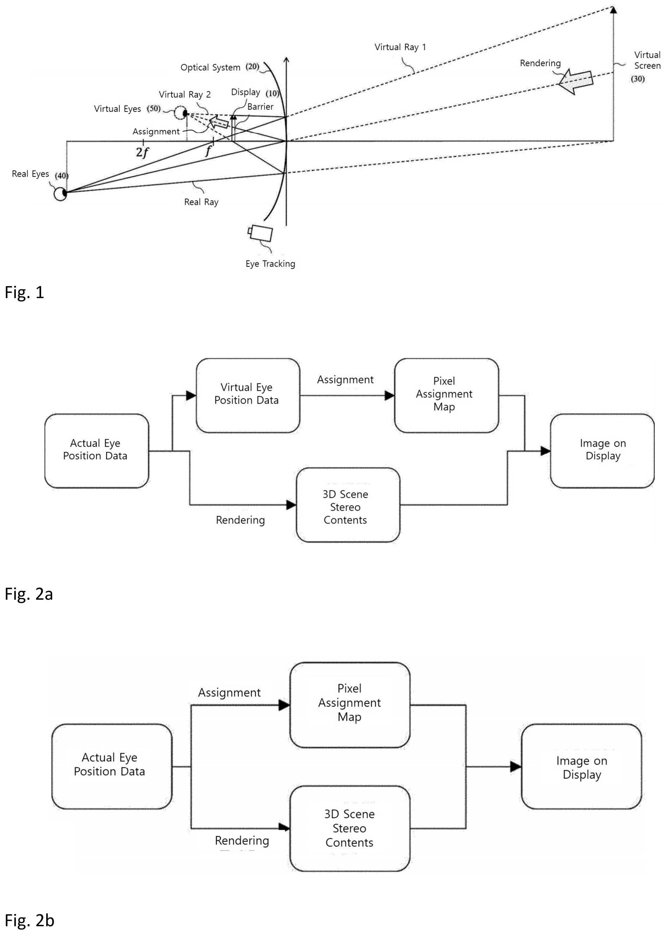

FIG. 1 is a diagram illustrating a rendering process for a virtual screen and real eyes according to the related art, FIG. 2A is a block diagram illustrating an approach to finding a virtual image in every frame according to the related art, and FIG. 2B is a block diagram illustrating an approach to finding a virtual image in every frame according to an embodiment of the disclosure.

Referring to FIG. 1, the related-art methods of three-dimensional (3D) rendering using a 3D display device 10 and a catadioptric 20 (or another optical system in front of the 3D display) convert an actual viewpoint position 40 to a virtual image 50 of the viewpoint position.

In this case, pixel assignment may be performed for the virtual image 50 of the viewpoint position and, as shown in FIG. 1, content rendering may be performed for the actual viewpoint position 40.

A pixel may include a plurality of subpixels, each of which may be assigned a pixel value. In the disclosure, references to a pixel may, in some cases, refer to a subpixel. Assigning a pixel may mean assigning a subpixel.

Comparing the related art to the disclosure with reference to FIGS. 1, 2A, and 2B, a 3D image display method of the related art requires an operation of defining a virtual eye position 50 and virtual eye position data, whereas a 3D image display method for realizing a 3D display image according to an embodiment of the disclosure does not require virtual eye position data.

That is, the related art is a method of obtaining virtual eye position data by optical transform based on actual eye position data and assigning pixel values corresponding to the virtual eye position data to form a pixel assignment map to create an image on a display. Such a method requires both an operation of defining a virtual eye position and virtual eye position data.

However, the 3D image display method according to an embodiment of the disclosure is a method of forming a pixel assignment map directly from actual eye position data by pixel value assignment to create an image on the display, and thus virtual eye position data is not required.

According to an embodiment of the disclosure, proposed is a method of assigning and rendering pixels for an actual viewpoint position without the need for conversion to a virtual image of the viewpoint position.

In the following, a 3D display system implementing a pixel assignment and rendering method according to an embodiment of the disclosure is described first.

An embodiment of the 3D display system for implementing a 3D display may include a 3D image controller, a 3D display device, and an optical system. Here, the optical system may include a catadioptric system.

In some embodiments, the 3D display device may be configured with a structure in which an optical system is located in front of the 3D display device. In some embodiments, the optical system may be located between the user and the 3D display device.

Here, the 3D display device may include a display panel and an optical layer. The optical layer may be a parallax barrier or a lenticular lens in some embodiments. The display panel may include a plurality of pixels, and the 3D imaging controller may assign pixel values to the plurality of pixels corresponding to a selected number of viewpoints based on an input image. For example, the 3D image controller may assign a pixel value corresponding to a first time point to a first pixel and a pixel value corresponding to a second time point to a second pixel.

In some embodiments, the first viewpoint and the second viewpoint may include a left eye viewpoint and a right eye viewpoint for the user. The display panel may display a panel image based on pixel values assigned by the 3D image controller.

The pixels of the display panel may be provided with light by a light source. For example, the light source may be a backlight unit located at the back of the display panel. As light is provided to the pixels, light corresponding to a pixel value of the pixel may be displayed to the user. In this case, the optical layer may limit the direction in which the light is seen by the user. Specifically, a parallax barrier may output light in a restricted direction through regularly spaced slits, and a lenticular lens may output light in a restricted direction through the curved geometry of the lens.

In some embodiments, a pixel assigned a pixel value corresponding to the first viewpoint may be provided with light in the direction of the first viewpoint, and a pixel assigned a pixel value corresponding to the second viewpoint may be provided with light in the direction of the second viewpoint. A user located in an eye space may view the image corresponding to the first viewpoint through the first viewpoint and view the image corresponding to the second viewpoint through the second viewpoint. In a case in which the first viewpoint corresponds to the user's left eye and the second viewpoint corresponds to the user's right eye, the user may experience a sense of stereoscopic vision by viewing different images by each eye.

The image output by the 3D display device may be presented to the user via an optical system. The optical system may include, for example, a mirror corresponding to reflective optics or a lens corresponding to refractive optics.

In some embodiments, the 3D display device may be implemented by means of a screen, and the optical system may magnify the image output to the 3D display device. For example, the 3D display device and the optical system may be implemented as part of a head up display (HUD) mounted on a vehicle. In this case, the optical system may include a translucent concave mirror in embodiments.

In some embodiments, the display panel includes a selected number of pixels, and the optical layer may include a periodic optical element covering the selected number of pixels, in which case the number of pixels of the display panel may be smaller than the pitch of the optical element.

The optical system may be configured to deliver the image in the optical layer with a magnification lower than the magnification of the display panel, thereby allowing the number of pixels under each optical component to change from small to large.

To assign a pixel value to a pixel of the display panel, the 3D imaging controller may determine the path of light through the pixel. Light passing through the pixels of the display panel may be referred to as rays. For example, in a case in which a ray of light passing through a first pixel is provided at a first time point, the 3D imaging controller may assign the first pixel a pixel value corresponding to the first time point.

The pixels of the display may include a subpixel structure, which may be referred to as a pixel structure in the disclosure.

The display panel according to an embodiment of the disclosure may include one or more of an LCD panel with LED illumination, a self-emitting LED/OLED panel, a playback field of a holographic spatial light modulator (SLM), or any other projection result with or without a DLP engine or relay optics from a microelectromechanical system (MEMS).

The optical layer according to an embodiment of the disclosure may include one of a parallax barrier having an opaque region and a transparent slit, a solid lenticular lens array, and a lenticular lens array having an air gap.

The optical system according to an embodiment of the disclosure may include a single or plurality of refractive or reflective components, at least one of which may act as a combiner to fuse a virtual image on a display with a real-world scene.

In the following, the 3D image display method according to embodiment of the disclosure implemented by a 3D display system is described in detail.

The 3D image display method according to embodiment of the disclosure may include: an eye position data collection operation of collecting actual eye position data of a user;

a virtual display panel preparation operation of preparing a virtual display panel having an augmented reality (AR) display specification;
a virtual barrier calculation operation of calculating a virtual barrier based on the actual eye position data and the virtual display panel;
a virtual display panel pixel assignment operation of assigning pixels of the virtual display panel to correspond to an actual viewpoint of the user, based on the actual eye position data and the virtual barrier;
a rendering operation of rendering stereo content corresponding to the actual viewpoint of the user; and
a display operation of displaying a 3D image based on the assigned pixels and the stereo content.

The 3D image display method of the present embodiment may use actual eye position data obtained by eye-tracking to perform pixel assignment and rendering. The actual eye position data of the user may be collected, for example, using an eye-tracking camera.

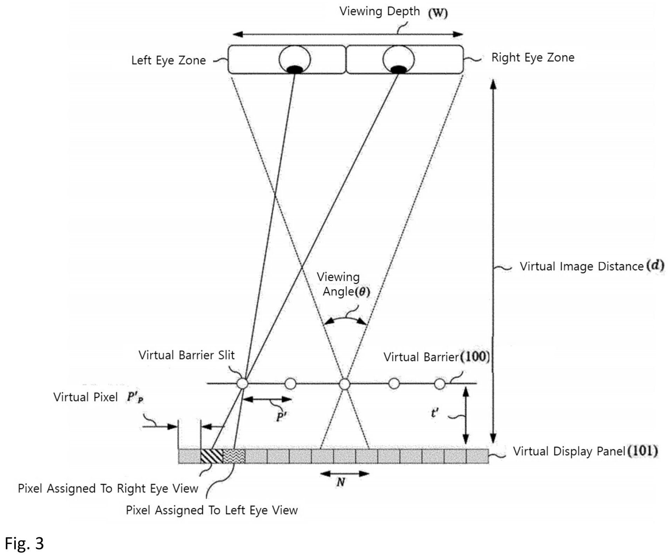

FIG. 3 is a diagram illustrating a process of preparing a virtual display panel and a method of calculating a virtual barrier according to an embodiment of the disclosure.

Referring to FIG. 3, the virtual display panel may be prepared to perform the 3D image display method of the present embodiment. Here, the virtual display panel may be configured to have, for example, an AR display specification. The AR display specification may include a virtual image distance d and a viewing angle θ in some embodiments. The virtual image distance d may refer to a distance d at which the virtual image is located in a case in which the distance from the actual eye position at which the virtual image is to be located is determined.

In some embodiments, the viewing angle θ may refer to the angle formed by two virtual lines starting at either end of the viewing width of the viewing zone encompassing the actual eye position, in a case in which the two virtual lines are set to intersect each other at a position where each virtual line passes through the slit of the virtual barrier.

Referring to FIG. 3, a virtual barrier 100 may be calculated for a virtual display panel. In some embodiments, magnification by the optical system may be taken into account in this case. Specifically, the virtual barrier 100 may be calculated from parameters of the optical system and the position of the virtual display panel.

Referring to FIG. 3, the virtual display panel may be located in a particular manner to provide a virtual image in an initial plane at the virtual image distance d from the actual eye position.

In this case, the optical system may form a 3D display image with a specific magnification.

To estimate the virtual barrier 100 according to the present embodiment, virtual barrier parameters may be calculated. The virtual barrier parameters may include a virtual barrier gap t' and a virtual barrier pitch P'.

First, the virtual barrier gap t' may be calculated by the following Equation 1.

$$[Equation\ 1]$$

$$t' = \frac{P_p * M * N}{2 * \tan\left(\frac{\theta}{2}\right)}$$

Here, $P_P$ is the pitch of pixels in the display panel, M is the magnification of a virtual display panel 101, N is the desirable number of pixels in the virtual display panel 101 for a single barrier pitch, and θ is the viewing angle that encompasses the viewing zone for both the left and right eyes.

In some embodiments, $P_P$ and M may be replaced with the pitch $P'_P$ of virtual display pixels by the following

Equation 2.
1991

[Equation 2]

$$P'_p = P_p * M$$

Then, the virtual barrier pitch P' may be calculated by the following Equation 3.

[Equation 3]

$$P' = P'_p * N * \frac{(d - t')}{d}$$

Here, d is the virtual image distance.
In the related art, the conversion process from actual eye position to virtual eye position requires continuous calculation based on the actual eye position, which disadvantageously slows down the system. That is, the virtual eye position corresponding to the actual eye position must be converted, and the virtual screen must also be converted by this conversion. However, the disclosure does not need to perform additional calculation once the virtual screen fixed for the actual eye position initially designed is calculated. Therefore, the system speed is improved because the calculation does not need to be performed continuously.
After the virtual barrier calculation operation, the virtual display panel pixel assignment operation may be performed to assign pixels of the virtual display panel to the left or right eye viewpoint to correspond to the actual viewpoint of the user, based on the actual eye position data and the virtual barrier parameters.
The virtual display panel pixel assignment operation according to the present embodiment may use the concept of a lenticular lens or a parallax barrier to split a signal from the pixels to the left or right eye.

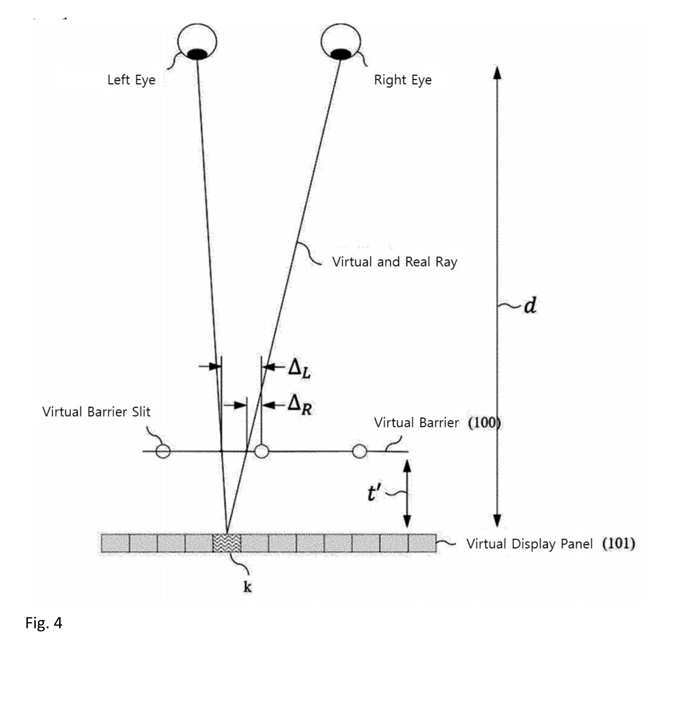

FIG. 4 is a diagram illustrating an assignment method based on a short-range rule according to an embodiment of the disclosure. Referring to FIG. 4, an eye position may be tracked on pixels through a virtual barrier plane.
In order to perform pixel assignment and rendering, the 3D image display method according to an embodiment of the disclosure may obtain actual eye position data obtained by eye tracking and then assign all pixels of the virtual display panel to the left eye or the right eye according to the actual eye position. Thereafter, rendering the content for the actual eye position may be performed and the image may appear on the display. This rendering operation is described later.
Referring to FIG. 4, the virtual display panel pixel assignment operation is described first.
In the virtual display panel pixel assignment operation, intersections close in distance to the virtual barrier slit may be considered in determining whether to assign a pixel for the left eye or the right eye.
As shown in FIG. 4, the real eyes, i.e., the left and right eyes, are located to correspond to the viewpoint. Here, accurate eye position data may be obtained by eye tracking.
Here, each of the virtual line corresponding to the left eye viewpoint and the virtual line corresponding to the right eye viewpoint is set to pass through the virtual barrier and converge on a single selected pixel in the virtual display panel. The virtual lines will then cross the virtual barrier.
The distances $\Delta_R$ and $\Delta_L$ from the intersections of the virtual lines with the virtual barrier to the nearest slit of the virtual barrier may be measured. For example, the pixel may be assigned to the left or right eye based on the minimum distance result between the distance $\Delta_L$ from the intersection of the virtual line corresponding to the left eye viewpoint to the nearest virtual barrier slit and the distance $\Delta_R$ from the intersection of the virtual line corresponding to the right eye viewpoint to the nearest virtual barrier slit.
Referring to FIG. 4, the distance $\Delta_R$ from the intersection of the virtual line corresponding to the right eye viewpoint to the slit is the minimum distance result, and thus the pixel k may be assigned to the right eye.
Specifically, pixels in the virtual display panel may be assigned to the left eye or the right eye by the following methods.
First, the virtual lines described above will be described.

(1) In a first operation, each ray may be translated into an assigned pixel. Here, a real ray may be extended into a virtual ray and vice versa. The rays may be formed as lines which intersect the virtual barrier plane at the actual eye position and also intersect the virtual display panel 101. In this case, the pixel of the display panel which intersects the ray may be the assigned pixel described above.
(2) In a second operation, the intersections of the rays and the barrier plane is calculated.

(3) In a third operation, the distances $\Delta_R$ and $\Delta_L$ from the intersections to the corresponding barrier slit are calculated. At this time, the distances $\Delta_R$ and $\Delta_L$ are compared for the left and right eyes respectively, and the minimum distance becomes the assignment condition. That is, the pixel the distances $\Delta_R$ and $\Delta_L$ of which fall within the minimum distance may be considered as the assigned pixel.

In particular, in a case in which the eye position data is $(x_R, y_R, d)$ and $(x_L, y_L, d)$ and the corresponding pixel is $(x_P, y_P, 0)$, the center of the barrier is $(x_b, y_b, 0)$. Thus, $\Delta_R$ and $\Delta_L$ may be calculated by Equation 4.

[Equation 4]

$$\Delta R = (x_R - x_p) * \frac{d - t'}{d} - x_b \text{ and } \Delta L = (x_L - x_p) * \frac{d - t'}{d} - x_b$$

Here, the pixel may be assigned to the left or right eye based on the minimum distance between $\Delta_R$ and $\Delta_L$.

Hereinafter, the 3D rendering operation of the 3D image display method according to an embodiment of the disclosure will be described.

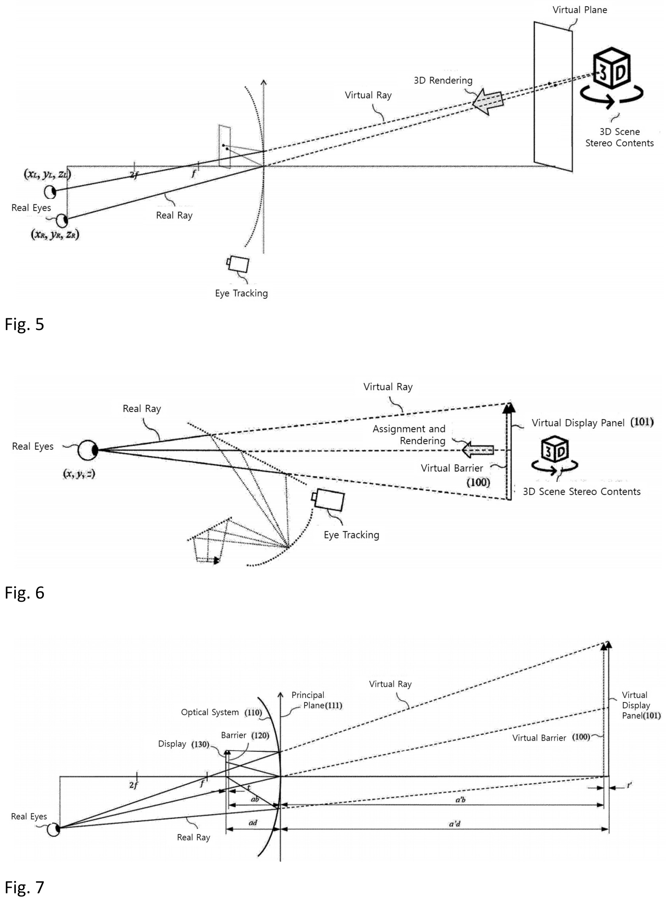

FIG. 5 is a diagram illustrating a system layout for 3D rendering of stereo content scenes which has a single path from a virtual display to the real eyes, according to an embodiment of the disclosure. In FIG. 5, the optical system is simplified to a single-mirror system.

Referring to FIG. 5, 3D scene stereo content may be rendered from eye position data $(x_R, y_R, z_R)$ and $(x_L, y_L, z_L)$ and the virtual image distance d, for two eye distances to the real eyes.

Here, the eye position data may include the left eye position data $(x_L, y_L, z_L)$ and the right eye position data $(x_R, y_R, z_R)$.

Initially, $z_R/z_R = d$, but this may change as the user moves.

Thereafter, the rendered stereo image is assigned to the pixels of the display panel.

FIG. 6 is a diagram illustrating a system layout for assignment and rendering which has a single path from a virtual display to the real eyes, according to an embodiment of the disclosure. Referring to FIG. 6, the assignment is shown in the same layout as that rendered using virtual objects on a more complex optical system layout.

Immediately after the virtual barrier parameters are calculated in the virtual barrier calculation operation, pixel assignment and rendering may be performed as described above. However, designing a physical device is still necessary. To design a physical device, such as a real 3D image display device, an actual barrier may be calculated from the virtual barrier.

FIG. 7 is a diagram illustrating a process of calculating an actual barrier from a virtual barrier 100, taking into account the configuration of an optical system 110, according to an embodiment of the disclosure. In FIG. 7, the barrier and the screen are located at different distances from the principal plane of the optical system to have different magnifications. In FIG. 7, the optical system is simplified to a single-mirror system.

A method of designing a 3D image display device according to an embodiment of the disclosure may include: an eye position data collection operation of collecting actual eye position data of a user;

a virtual display panel preparation operation of preparing a virtual display panel having an AR display specification;
a virtual barrier calculation operation of calculating a virtual barrier based on the actual eye position data and the virtual display panel; and
an actual barrier designing operation of designing an actual barrier based on the virtual barrier.

The 3D image display device designed in this manner may include two main components, i.e., a display panel and an optical layer which split a light signal according to a left-eye viewpoint or a right-eye viewpoint from the pixels.

In the actual barrier designing operation according to the present embodiment, the optical properties of the optical system 110 may be used to implement the optical layer according to the parameters of the virtual barrier 100 calculated in the virtual barrier calculation operation described above.

An actual barrier 120 and a real display panel 130 have different distances from the optical system 110 or the principal plane of the optical system 110, thereby resulting in different magnifications as shown in FIG. 7.

To design the actual barrier 120 according to the present embodiment, parameters of the actual barrier may be calculated. Here, the parameters of the actual barrier may be calculated as a distance $a_b$ from the principal plane 111 of the optical system 110 to the actual barrier 120, an actual barrier gap t, and an actual barrier pitch P.

Referring to FIG. 7, $a_d$ is the distance from the principal plane 111 to the real display panel 130, $a'_d$ is the distance from the principal plane 111 to the virtual display panel 101, and f is the focal length of the optical system.

First, the distance $a_b$ from the principal plane 111 to the actual barrier 120 may be calculated by the following Equation 5.

[Equation 5]

$$a_b = \frac{a'_b * f}{a'_b + f}$$

Here, a'<sub>b</sub> is the distance from the principal plane 111 of the optical system 110 to the virtual barrier 100. The distance $a'_b$ to the virtual barrier 100 may be calculated by the following Equation 6.

[Equation 6]

$$a'_b = a'_d - t'$$

Then, the actual barrier gap t may be calculated by the following Equation 7.

[Equation 7]

$$t - a_d - a_b$$

Then, the magnification M<sub>b</sub> of the virtual barrier 100 may be calculated by the following Equation 8.

[Equation 8]

$$M_b = \frac{a'_b}{a_b}$$

Here, the magnification $M_b$ of the virtual barrier 100 is smaller than the magnification M of the virtual display panel 101.

The actual barrier pitch P may be calculated by the following Equation 9.

[Equation 9]

$$P = \frac{P'}{M_b}$$

The actual barrier pitch P is slightly larger than $N*P_P$ and the virtual barrier pitch P' is slightly smaller than $N*P'_P$. This corresponds to the position of each viewpoint in front of and behind the display panel.

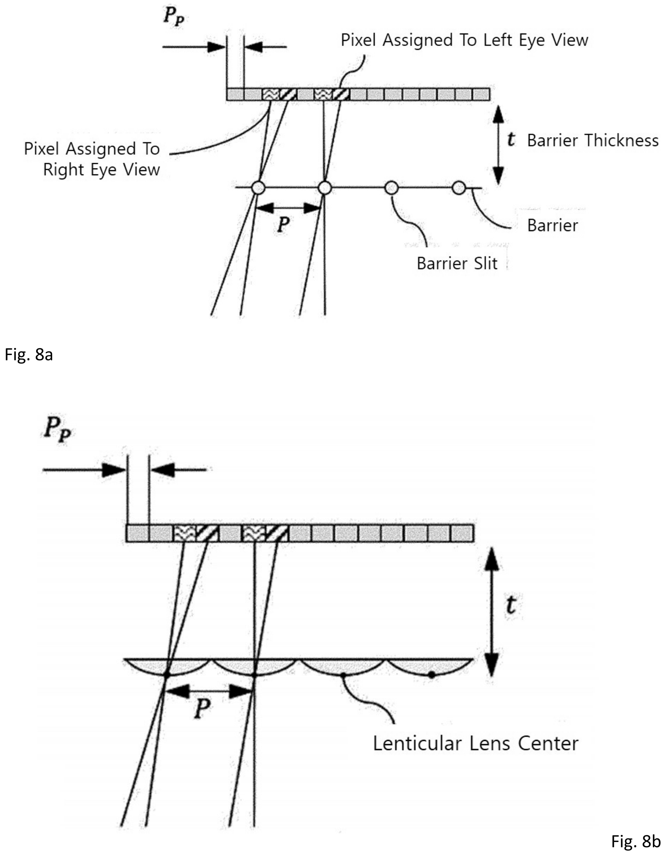

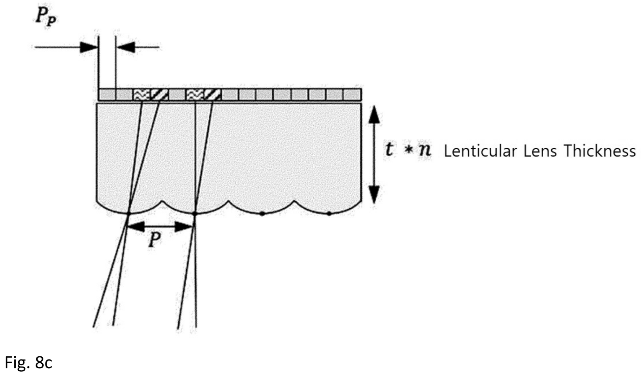

FIG. 8A is a diagram illustrating an actual barrier 120 as a parallax barrier having slits according to an embodiment of the disclosure, FIG. 8B is a diagram illustrating an actual barrier 120 as a lenticular lens having an air gap according to an embodiment of the disclosure, and FIG. 8C is a diagram illustrating an actual barrier 120 as a solid lenticular lens according to an embodiment of the disclosure.

Referring to FIG. 8, the actual barrier may be designed as a parallax barrier, designed as a lenticular lens having an air gap, or designed as a solid lenticular lens, depending on the embodiment. The barrier gap depends on the medium between the pixel and the barrier, which in this embodiment has been calculated for the case where the medium is air.

In the case of FIG. 8A, an actual parallel barrier is designed as an actual barrier. In this case, the actual parallel barrier may be designed using the actual barrier gap t and the actual barrier pitch P, which are the parameters of the actual barrier described above.

In other words, the actual barrier gap t, i.e., the parameter of the actual barrier described above, may correspond to the thickness t of the actual parallel barrier, and the actual barrier pitch P, i.e., the parameter of the actual barrier, may correspond to the distance P between the slits of the actual parallel barrier. Thus, an actual parallel barrier may be designed using this feature.

In the case of FIG. 8B, a real lenticular lens having an air gap as an actual barrier is designed. In this case, the actual barrier gap t, i.e., a parameter of the actual barrier, may correspond to the distance t between a real lenticular lens to

**EP 4 648 405 A1**

be designed and a real display panel, and the actual barrier pitch P may correspond to the distance P between the centers of the convex portions of the real lenticular lenses to be designed. Thus, the real lenticular lens having an air gap may be designed using this feature.

In some embodiments, in a case in which the lenticular lens is used as an actual barrier, the radius of the lenticular lens may be calculated so that the actual barrier gap t corresponds to the focal length of the lenticular lens.

In the case of FIG. 8C, a real solid lenticular lens is designed as an actual barrier. In this case, the actual barrier gap t, i.e., a parameter of the actual barrier, may correspond to the thickness t of the real solid lenticular lens, and the actual barrier pitch P may correspond to the distance P between the centers of the convex portions of the real solid lenticular lens. Thus, the real solid lenticular lens may be designed using this feature.

Typically, the lenticular lens is formed of a solid material, so the actual thickness is t*n, where n is the refractive index of the lenticular lens material.

The above-described embodiments of the disclosure may be implemented in the form of computer programs executable on a computer using various components, and such computer programs may be stored in computer-readable media. Examples of the computer-readable media may include: magnetic media such as hard disks, floppy disks, and magnetic tapes; optical recording media such as CD-ROMs and DVDs; magneto-optical media such as floptical disks; and hardware devices such as ROMs, RAMs, and flash memories specifically configured to store program instructions and execute the program instructions.

The computer programs may be specifically designed and configured for the disclosure or may be known and available to a person having ordinary knowledge in the art of computer software. Examples of computer programs may include machine code produced by compilers and high-level language code executable on computers using interpreters.

In the specification of the disclosure, the use of the term "the" and similar denoting terms may correspond to both singular and plural forms. Furthermore, recitation of ranges of values herein are intended merely to refer to respective separate values falling within the respective ranges and (unless otherwise indicated herein) the respective separate values are incorporated herein as if individually recited herein.

Finally, the operations of any method described herein may be performed in any suitable order unless otherwise indicated herein or otherwise clearly contradicted by the context. However, the operations shall not be limited to the described sequence. The use of any examples or illustrative languages (e.g., "such as") provided herein, is intended merely to better illustrate the disclosure and does not pose a limitation on the scope of the disclosure unless otherwise defined by the Claims. Furthermore, a person having ordinary knowledge in the art will appreciate that various modifications, combinations, and changes are possible according to design conditions and factors within the scope of the Claims or equivalents thereof.

Therefore, the spirit of the disclosure shall not be limited to the above-described embodiments, and the entire scope of the appended claims and equivalents thereof will fall within the scope and spirit of the disclosure.

The above description provides an example of the technical idea of the disclosure for illustrative purposes only. Those having ordinary knowledge in the technical field to which the disclosure pertains will appreciate that various modifications and changes are possible without departing from the essential features of the disclosure.

The embodiments described in the disclosure are intended to illustrate rather than limit the scope of the technical idea of the disclosure, and the scope of the disclosure is not limited by the embodiments.

<Description of Reference Numerals of Drawings>

100: virtual barrier
101: virtual display panel
110: optical system
111: principal plane
120: actual barrier
130: real display panel

**Claims**

**1.** A three-dimensional image display method comprising:

an eye position data collection operation of collecting actual eye position data of a user;
a virtual display panel preparation operation of preparing a virtual display panel having an augmented reality display specification;

a virtual barrier calculation operation of calculating a virtual barrier based on the actual eye position data and the virtual display panel;

a virtual display panel pixel assignment operation of assigning pixels of the virtual display panel to correspond to an actual viewpoint of the user, based on the actual eye position data and the virtual barrier;

a rendering operation of rendering stereo content corresponding to the actual viewpoint of the user; and

a display operation of displaying a three-dimensional image based on the assigned pixels and the stereo content.

2.  The three-dimensional image display method of claim 1, wherein the actual eye position data is collected using an eye-tracking camera.

3.  The three-dimensional image display method of claim 1, wherein the actual viewpoint comprises a left eye viewpoint and a right eye viewpoint, and

the pixel assignment operation assigns a pixel corresponding to the left eye viewpoint and a pixel corresponding to the right eye viewpoint.

4.  The three-dimensional image display method of claim 1, wherein the actual viewpoint comprises a left eye viewpoint and a right eye viewpoint, and

the stereo content comprises paired data of content corresponding to the left eye viewpoint and content corresponding to the right eye viewpoint.

5.  The three-dimensional image display method of claim 1, wherein the augmented reality display specification comprises a virtual image distance (d) and a viewing angle ($\theta$).

6.  The three-dimensional image display method of claim 1, wherein the virtual display panel has a first parameter, and the virtual barrier calculation operation calculates a second parameter of the virtual barrier from the augmented reality display specification, the first parameter, and the actual eye position data.

7.  The three-dimensional image display method of claim 6, wherein the first parameter comprises a magnification (M) of the virtual display panel and a pitch ($P'_P$) and a number (N) of pixels of the virtual display panel.

8.  The three-dimensional image display method of claim 6, wherein the second parameter comprises a virtual barrier gap (t') and a virtual barrier pitch (P').

9.  A computer program stored on a medium, configured to execute the method of one of claims 1 to 8 in combination with hardware.

10. A three-dimensional image display method comprising:

a data collection operation of collecting actual eye position data of a user;

a virtual display panel setting operation of setting a virtual display panel located at a virtual image distance (d) and having a first parameter from the actual eye position data;

a virtual barrier calculation operation of calculating a second parameter of a virtual barrier based on an augmented reality display specification, the first parameter, and the actual eye position data;

a pixel assignment operation of assigning pixels of the virtual display panel based on the virtual barrier of which the second parameter is calculated, actual left eye position data, and actual right eye position data, wherein the actual eye position data comprises the actual left eye position data and the actual right eye position data;

a rendering operation of rendering paired contents corresponding to the actual left eye position data and the actual right eye position data; and

a display operation of displaying a three-dimensional image based on the assigned pixels and the paired contents.

11. A three-dimensional image display device comprising:

a processor; and

a memory having computer-readable instructions stored thereon,

wherein the processor is configured, when the instructions are executed by the processor, to:

calculate a virtual barrier based on collected actual eye position data of a user and a virtual display panel having an augmented reality display specification;
assign pixels of the virtual display panel to correspond to an actual viewpoint of the user, based on the actual eye position data and the virtual barrier;
render stereo content corresponding to the actual viewpoint of the user; and
display a three-dimensional image based on the assigned pixels and the stereo content.

12. The three-dimensional image display device of claim 11, wherein the augmented reality display specification comprises a virtual image distance (d) and a viewing angle ($\theta$).

13. The three-dimensional image display device of claim 11, wherein the virtual display panel has a first parameter, and the virtual barrier calculation calculates a second parameter of the virtual barrier from the augmented reality display specification, the first parameter, and the actual eye position data.

14. The three-dimensional image display device of claim 13, wherein the first parameter comprises a magnification (M) of the virtual display panel and a pitch ($P'_P$) and a number (N) of pixels of the virtual display panel.

15. The three-dimensional image display device of claim 13, wherein the second parameter comprises a virtual barrier gap (t') and a virtual barrier pitch (P').

16. A method of designing a three-dimensional image display device, the method comprising:

an eye position data collection operation of collecting actual eye position data of a user;
a virtual display panel preparation operation of preparing a virtual display panel having an augmented reality display specification;
a virtual barrier calculation operation of calculating a virtual barrier based on the actual eye position data and the virtual display panel; and
an actual barrier designing operation of designing an actual barrier based on the virtual barrier.

17. The method of claim 16, wherein the augmented reality display specification comprises a virtual image distance (d) and a viewing angle ($\theta$).

18. The method of claim 16, wherein the virtual display panel has a first parameter, and the virtual barrier calculation operation calculates a second parameter of the virtual barrier from the augmented reality display specification, the first parameter, and the actual eye position data.

19. The method of claim 18, wherein the first parameter comprises a magnification (M) of the virtual display panel and a pitch ($P'_P$) and a number (N) of pixels of the virtual display panel.

20. The method of claim 18, wherein the second parameter comprises a virtual barrier gap (t') and a virtual barrier pitch (P').

21. The method of claim 16, wherein the actual barrier designing operation calculates a third parameter of the actual barrier using a second parameter of the virtual barrier.

22. The method of claim 21, wherein the second parameter comprises a virtual barrier gap (t') and a virtual barrier pitch (P'), and the third parameter comprises an actual barrier gap (t) and an actual barrier pitch (P).

23. The method of claim 16, wherein the actual barrier designing operation calculates a distance ($a_b$) from a principal plane of a real optical system to a real display panel and a distance ($a_d$) from the principal plane of the real optical system to the actual barrier.

Fig. 1

Fig. 2a

Fig. 2b

Fig. 3

Fig. 4

Fig. 5

Fig. 6

Fig. 7

Fig. 8a

Fig. 8b

Fig. 8c

## INTERNATIONAL SEARCH REPORT

| International application No. |
| --- |
| **PCT/KR2024/001302** |

---

**A.  CLASSIFICATION OF SUBJECT MATTER**

**H04N 13/31**(2018.01)i; **H04N 13/305**(2018.01)i; **H04N 13/383**(2018.01)i; **H04N 13/117**(2018.01)i

According to International Patent Classification (IPC) or to both national classification and IPC

**B.  FIELDS SEARCHED**

Minimum documentation searched (classification system followed by classification symbols)

H04N 13/31(2018.01); H04N 13/117(2018.01); H04N 13/128(2018.01); H04N 13/156(2018.01); H04N 13/30(2018.01); H04N 13/305(2018.01); H04N 13/366(2018.01); H04N 13/383(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 입체 영상 디스플레이(stereoscopic video display), 픽셀(pixel), 가상 배리어(virtual barrier), 시점(viewpoint)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0066826 A (SAMSUNG ELECTRONICS CO., LTD.) 11 June 2020 (2020-06-11)<br>See paragraphs [0001]-[0221]; claims 1-20; and figures 1-21. | 1-23 |
| A | KR 10-2019-0029331 A (SAMSUNG ELECTRONICS CO., LTD.) 20 March 2019 (2019-03-20)<br>See claims 1-19. | 1-23 |
| A | KR 10-2018-0057263 A (SAMSUNG ELECTRONICS CO., LTD.) 30 May 2018 (2018-05-30)<br>See claims 1-20. | 1-23 |
| A | US 2020-0374504 A1 (MAGIC LEAP, INC.) 26 November 2020 (2020-11-26)<br>See claims 1-15. | 1-23 |
| A | KR 10-2022-0163353 A (AYE3D INC. et al.) 09 December 2022 (2022-12-09)<br>See claims 1-45. | 1-23 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 April 2024** | **25 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001302**

| Patent document cited in search report | | | Publication date (day/month/year) | Patent family member(s) | | | Publication date (day/month/year) |
|---|---|---|---|---|---|---|---|
| KR | 10-2020-0066826 | A | 11 June 2020 | US | 11070782 | B2 | 20 July 2021 |
| | | | | US | 2020-0175750 | A1 | 04 June 2020 |
| KR | 10-2019-0029331 | A | 20 March 2019 | CN | 109495734 | A | 19 March 2019 |
| | | | | CN | 109495734 | B | 28 December 2021 |
| | | | | EP | 3454553 | A1 | 13 March 2019 |
| | | | | EP | 3454553 | B1 | 04 August 2021 |
| | | | | JP | 2019-054513 | A | 04 April 2019 |
| | | | | JP | 7253342 | B2 | 06 April 2023 |
| | | | | US | 11051003 | B2 | 29 June 2021 |
| | | | | US | 2019-0082168 | A1 | 14 March 2019 |
| KR | 10-2018-0057263 | A | 30 May 2018 | CN | 108090941 | A | 29 May 2018 |
| | | | | EP | 3324621 | A1 | 23 May 2018 |
| | | | | JP | 2018-085727 | A | 31 May 2018 |
| | | | | JP | 7098307 | B2 | 11 July 2022 |
| | | | | US | 10521953 | B2 | 31 December 2019 |
| | | | | US | 2018-0144542 | A1 | 24 May 2018 |
| US | 2020-0374504 | A1 | 26 November 2020 | CN | 113875230 | A | 31 December 2021 |
| | | | | CN | 113875230 | B | 28 March 2023 |
| | | | | EP | 3973510 | A1 | 30 March 2022 |
| | | | | EP | 3973510 | A4 | 13 July 2022 |
| | | | | JP | 2022-533714 | A | 25 July 2022 |
| | | | | JP | 7426413 | B2 | 01 February 2024 |
| | | | | US | 11089282 | B2 | 10 August 2021 |
| | | | | US | 2021-337176 | A1 | 28 October 2021 |
| | | | | WO | 2020-236460 | A1 | 26 November 2020 |
| KR | 10-2022-0163353 | A | 09 December 2022 | CA | 3162390 | A1 | 24 June 2021 |
| | | | | CN | 115486062 | A | 16 December 2022 |
| | | | | EP | 4078947 | A1 | 26 October 2022 |
| | | | | JP | 2023-508342 | A | 02 March 2023 |
| | | | | TW | 202131675 | A | 16 August 2021 |
| | | | | US | 2023-051252 | A1 | 16 February 2023 |
| | | | | WO | 2021-119807 | A1 | 24 June 2021 |

Form PCT/ISA/210 (patent family annex) (July 2022)